# EUROPEAN PATENT SPECIFICATION

(11) **EP 1 413 417 B1**
(45) Date of publication and mention of the grant of the patent: **26.01.2011**
(21) Application number: 02755743.8
(22) Date of filing: 01.08.2002
(51) Int. Cl.: B29C 45/14

(54) **DOUBLE-FACE IN-MOLD FORMING METHOD**
DOPPELSEITIGES FORMVERFAHREN IM WERKZEUG
PROCEDE DE FORMAGE EN MOULE DOUBLE FACE

(30) Priority: 02.08.2001 JP 2001235307; 11.09.2001 JP 2001275483; 26.06.2002 JP 2002185680
(43) Date of publication of application: 28.04.2004
(73) Proprietor: Yoshida Kogyo Co., Ltd, Sumida-ku, Tokyo 131-0043 (JP)
(72) Inventor: YUHARA, Yukitomo, Sumida-ku, Tokyo 131-0043 (JP); KURAMITSU, Mikihiro, Sumida-ku, Tokyo 131-0043 (JP)
(74) Representative: Patentanwälte Westphal, Mussgnug & Partner
(86) International application number: PCT/JP2002/007841
(87) International publication number: WO 2003/013823

(56) References cited:
- JP-A- 6 099 458
- JP-A- 9 001 590
- JP-A- 48 038 363
- JP-A- 59 120 432
- JP-A- 2000 296 533
- JP-A- 2000 334 768
- JP-A- 2001 260 168
- US-A- 4 965 037
- US-A- 5 894 006
- US-A1- 2001 038 493
- PATENT ABSTRACTS OF JAPAN vol. 018, no. 366 (M-1636), 11 July 1994 (1994-07-11) -& JP 06 099457 A (YOSHIDA KOGYO KK <YKK>), 12 April 1994 (1994-04-12) -& DATABASE WPI Section Ch, Week 199519 Derwent Publications Ltd., London, GB; Class A32, AN 1995-141475 XP002386131 & JP 06 099457 A (YOSHIDA KOGYO KK) 12 April 1994 (1994-04-12)
- PATENT ABSTRACTS OF JAPAN vol. 018, no. 366 (M-1636), 11 July 1994 (1994-07-11) & JP 06 099458 A (YOSHIDA KOGYO KK <YKK>), 12 April 1994 (1994-04-12) -& DATABASE WPI Section Ch, Week 199519 Derwent Publications Ltd., London, GB; Class A32, AN 1995-141476 XP002386132 & JP 06 099458 A (YOSHIDA KOGYO KK) 12 April 1994 (1994-04-12)
- PATENT ABSTRACTS OF JAPAN vol. 010, no. 122 (M-476), 7 May 1986 (1986-05-07) & JP 60 250927 A (MITSUBISHI GAS KAGAKU KK), 11 December 1985 (1985-12-11)
- PATENT ABSTRACTS OF JAPAN vol. 010, no. 122 (M-476), 7 May 1986 (1986-05-07) & JP 60 250925 A (MITSUBISHI GAS KAGAKU KK), 11 December 1985 (1985-12-11)

## Description

### Technical Field

This invention relates to a method for manufacturing a double-side in-mold molded product, in which transfer printings are provided on each side.

### Background Art

Conventionally, various methods are provided for manufacturing a transfer molded product in which molding and transfer printing are done simultaneously. Particularly, in a case where the transfer printing is made to the double sides of the molded product, a resin must be injected between two continuous films. One example of this technique for manufacturing such a product having transfer printing on double sides, having a mechanism punching a hole to a film is disclosed in JP-A-62-227613.

In this method for manufacturing a product having transfer printing on double sides, the punching mechanism is provided on a stationary mold side, and the punching mechanism punches a hole to a transfer film provided to the stationary mold side and fed by a positioning means. By injecting the resin through the hole, a product having a various shape with printings transferred at double sides, is obtained.

However, since the method for manufacturing a product having transfer printing on double sides is required to punch the hole in the film, there raises problems that punching dusts may remain in a cavity of the mold during the operation for punching the hole to render the punch dust contained in the transparent molded product, or that a yield of the products may be lowered where the punch dust forms a scar on the surface of the molded product as the punch dusts clung to the mold.

Document JP-A-6099457 discloses a method for a double-side in-mold transfer molding in using a stationary mold and a movable mold having a cavity for a molding a molded product and passing a first continuous film and a second continuous film each having a printing layer facing one another, the method comprising steps of forming an inlet passage extending in the direction of orthogonal to a film feeding direction for inletting a resin into the cavity when the stationary mold and the movable mold are clamped, forming an inlet at one end of the inlet passage for injecting in the resin, placing each edge of the first continuous film and second continuous film positionally shifted in a direction orthogonal to the film feeding direction and passing through the first continuous film and the second continuous film at the stationary mold side and the movable mode side, respectively and further the comprising the step of injecting the resin between the first continuous film and the second continuous film from the inlet passage upon clamping the movable mold and the stationary mold to mold a moldet product is known. From US-A-4,965,037, it is known that resin pressure may be used to press the second film against a cavity.

### Disclosure of the Invention

It is therefore an object of the invention to provide a method for manufacturing double-side in-mold molded product having no need to punch a hole in a film so that a punch dust is prevented to be molded together within the product and that a forming of a scar on the surface of the molded product by the punch dust is prevented, and therefore, the yield of the product is improved.

To solve the above problem, according to the invention, there are provided two representative methods for manufacturing double-side in-mold molded product as defined in claims 1 and 2.

### Brief Description of the Drawings

Fig. 1 is a perspective view of the protective panel formed by a method according to a first exemplary embodiment not belonging to the invention;
Fig. 2 is an explanatory drawing of a step of passing through a continuation film continuously between a stationary mold and a movable mold;
Fig. 3 is an explanatory drawing of the stationary mold and the movable mold;
Fig. 4 is an explanatory drawing of the stationary mold and the movable mold;
Fig. 5 is a drawing showing a sectional side view of a continuous film;
Fig. 6 is a perspective drawing of the continuous film;
Fig. 7 is a perspective drawing of the continuous film;
Fig. 8 is a explanatory drawing of a method for manufacturing a protect panel;
Fig. 9 is an explanatory drawing of the method for manufacturing the protect panel;
Fig. 10 is an explanatory drawing of the method for manufacturing the protect panel;
Fig. 11 is an explanatory drawing of the method for manufacturing the protect panel;
Fig. 12 is an explanatory drawing of the method for manufacturing the protect panel;
Fig. 13 is an explanatory drawing of an arrangement of an inlet passage and a print pattern;
Fig. 14 is an explanatory drawing of a step of passing through a continuation film continuously between a stationary mold and a movable mold of a second embodiment belonging to the invention;
Fig. 15 is a sectional view of the stationary mold and the movable mold;
Fig. 16 is a perspective view of the continuous film;
Fig. 17 is an explanatory drawing of a method for manufacturing a protect panel;
Fig. 18 is an explanatory drawing of the method for manufacturing the protect panel;
Fig. 19 is an explanatory drawing of an arrangement of an inlet passage and a print pattern;
Fig. 20 is an explanatory drawing of a stationary mold and a movable mold of a third embodiment belonging to the invention;
Fig. 21 is an explanatory drawing of a step of passing through a continuation film continuously between a stationary mold and a movable mold of a forth exemplary embodiment not belonging to the invention;
Fig. 22 is a sectional view of the stationary mold and the movable mold;
Fig. 23 is a perspective view of the continuous film;
Fig. 24 is an explanatory drawing of a method for manufacturing a protect panel; and
Fig. 25 is an explanatory drawing of the method for manufacturing the protect panel.

### Best Mode for Carrying Out the Invention

### [First embodiment]

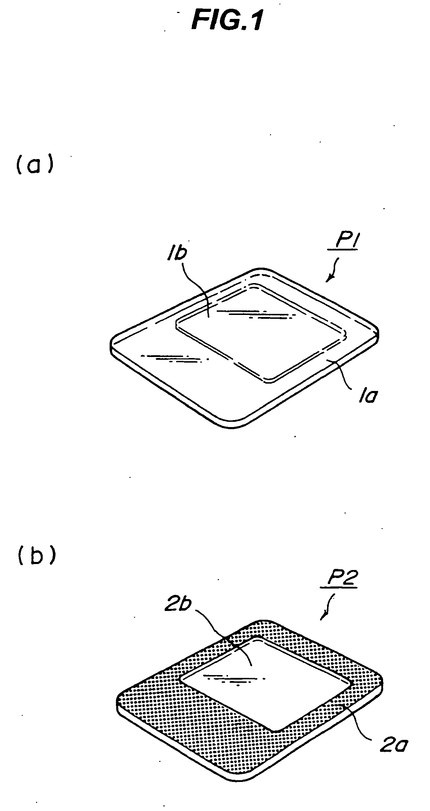

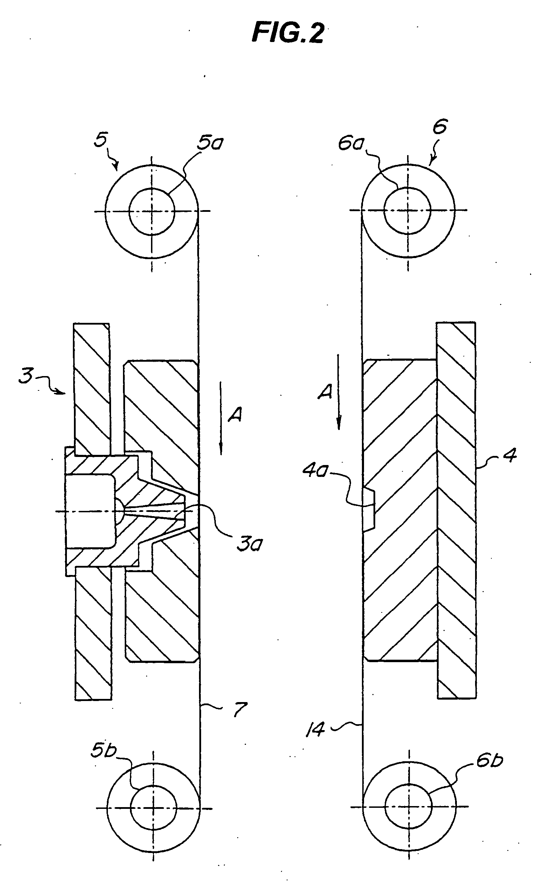

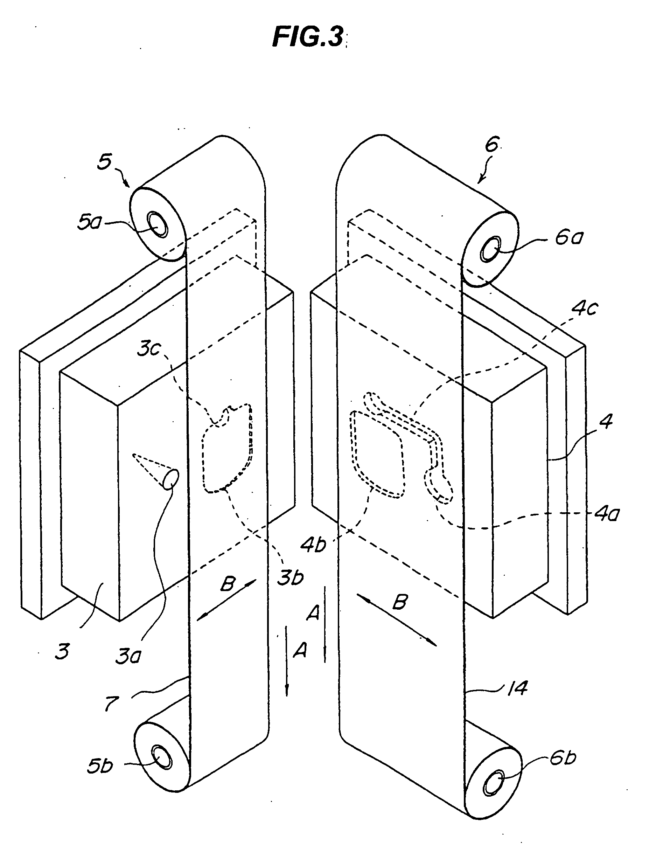

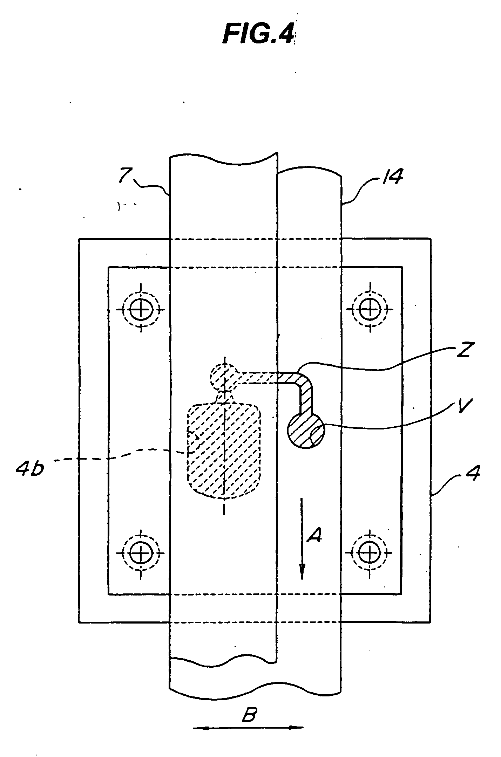

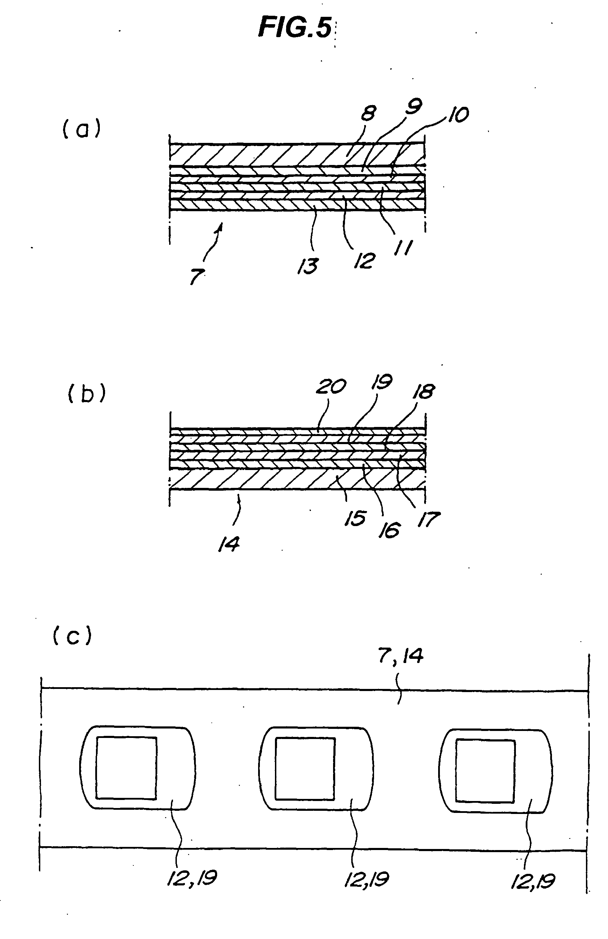

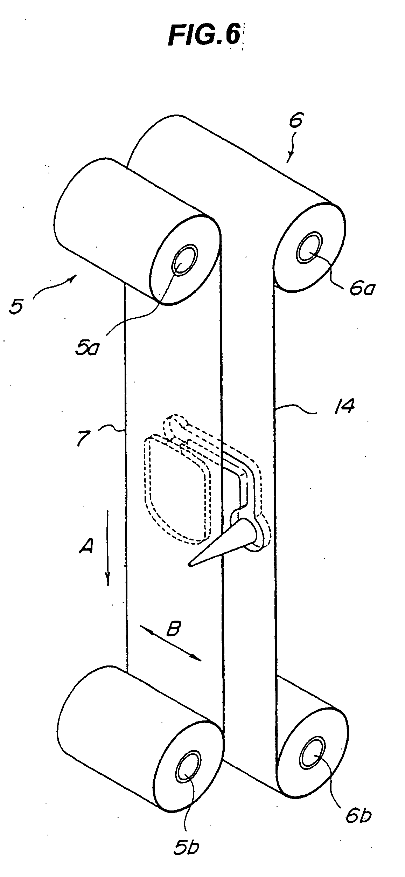

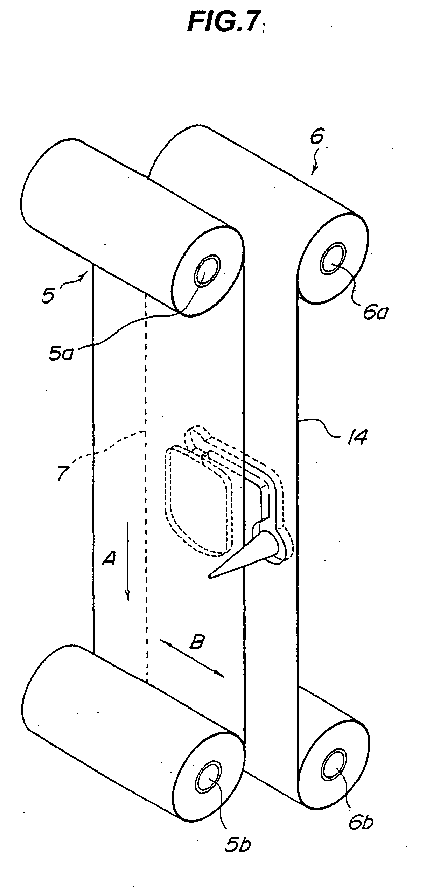

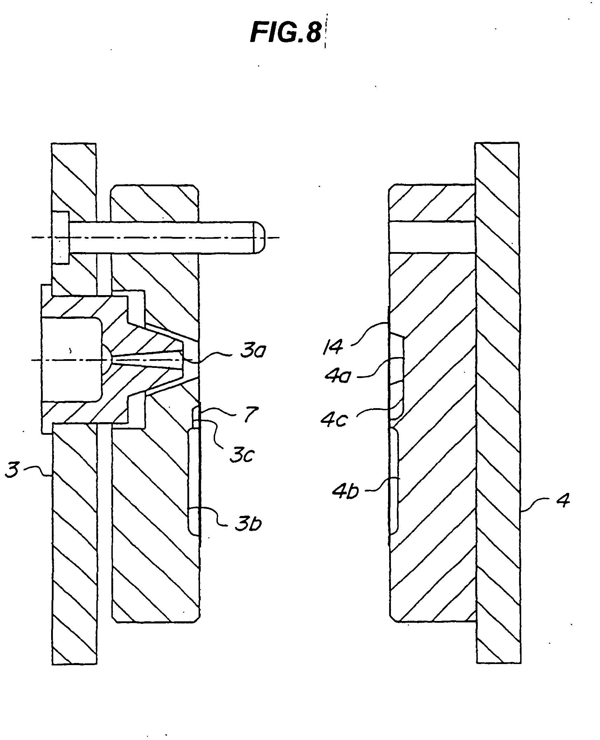

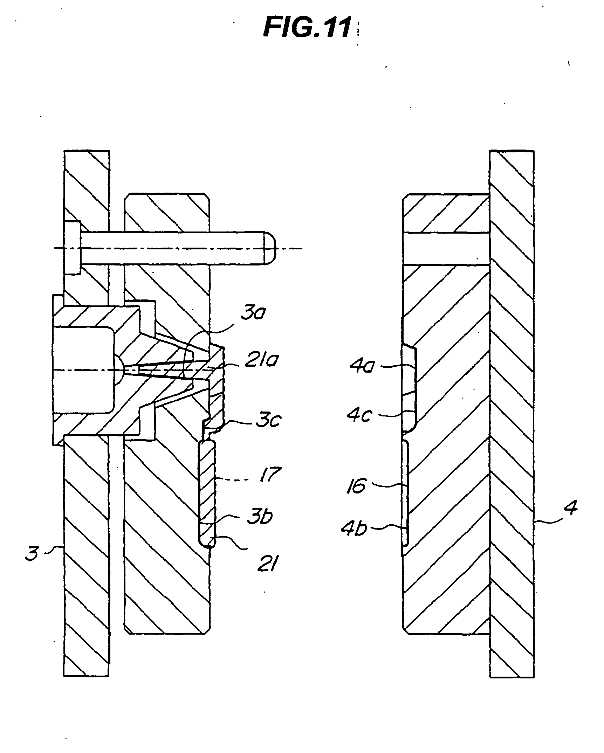

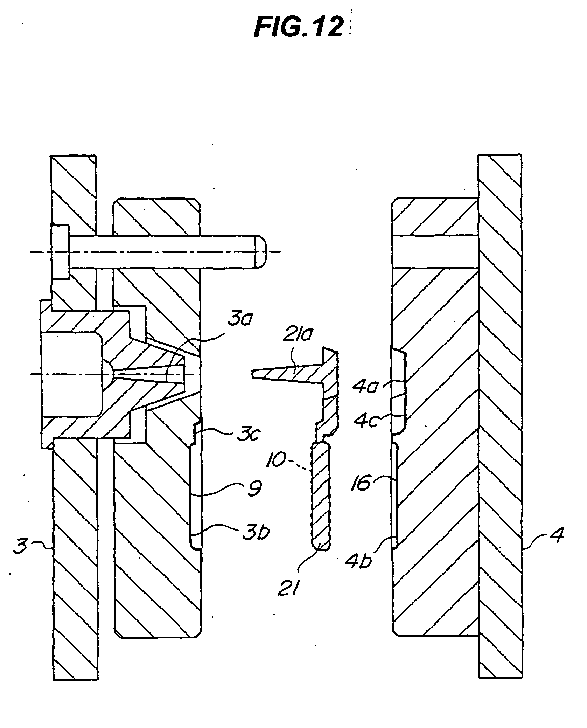

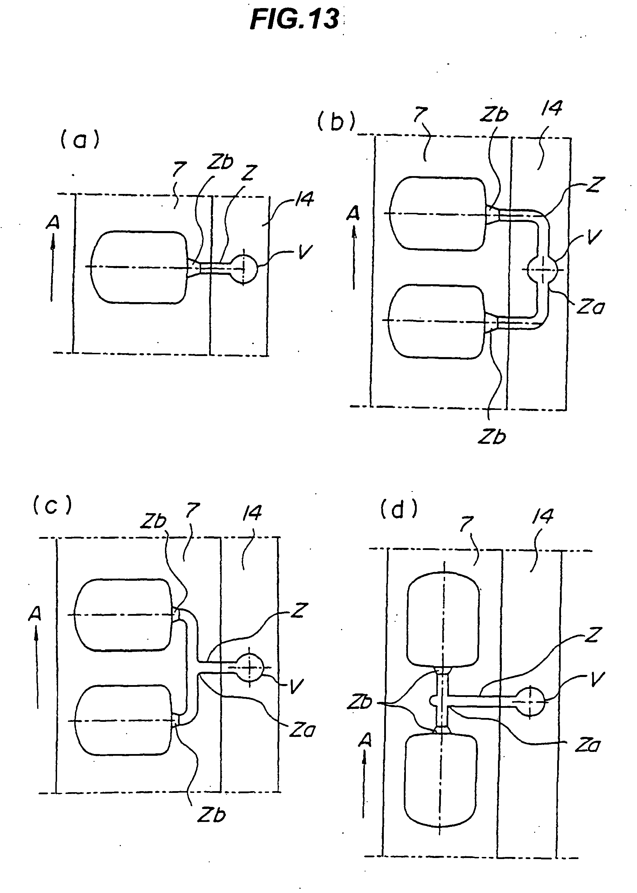

Hereinafter, a first exemplary embodiment of the method for manufacturing a double-side in-mold transfer molded product not belonging to the invention will be explained referring to the drawings. Fig. 1 is a perspective view of the protective panel formed by a method according to an embodiment of the invention; Fig. 2 is an explanatory drawing of the step a step of passing through a continuation film continuously between a stationary mold and a movable mold; Figs. 3 and 4 are explanatory drawings of the stationary mold and the movable mold; Fig. 5 is a drawing showing a sectional side view of a continuous film; Figs. 6 and 7 are perspective drawings of the continuous film; Figs. 8 through 12 are explanatory drawings of a method for manufacturing a protect panel; and Fig. 13 is an explanatory drawing of an arrangement of an inlet passage and a print pattern.

An example of a protection panel P1 manufactured by the embodiment is shown in FIG 1. The protection panel P1 is an example of a panel for a display window of an electronic equipment such as a cellular phone. The protection panel P1 is a transparent plate body made of acryl, and as shown in Fig. 1(a), a surface thereof has a translucent frame 1a printed on a surrounding area and a transparent display window 1b through which to display a liquid crystal screen on a central area. Also, as shown in Fig. 1(b), a back side of the protection panel P1 has a metallic frame 2a printed on a surrounding area and a transparent display window 2b through which to display a liquid crystal screen on a central area. As configured above, the protection panel P1 has the transparent display window of the display windows 1a and 1b through which to display the liquid crystal screen on the central area, and the frame with metallic luster formed by the metallic color of the back side seen-through the translucent color of the surface on the surrounding area of the display window.

Hereinafter, a method for manufacturing the protection panel P1 for the display window of an electronic equipment of the embodiment will be explained. The embodiment is an example of a molding apparatus having a method of sending two continuation films parallel.

As shown in Fig. 2, in the first step, a first continuation film 7 and a second continuation film 14 are passed through between a stationary mold 3 and a movable mold 4 continuously.

As shown in Fig. 3, an inlet 3a for introducing a transparent resin, a cavity 3b, and a second curve 3c connected to the cavity 3b are formed to the stationary mold 3. An inlet 4a for introducing a transparent rein, a first curve 4c, and a cavity 4b are formed to the movable mold 4. As shown in Fig. 4, when the stationary mold 3 and the movable mold 4 are clamped, an inlet passage Z formed by the second curve 3c and the first curve 4c for introducing the resin into the cavities 3b, 4b, is formed in a direction (direction shown by arrow B in Fig. 3) orthogonal to a film feeding direction (direction shown by arrow A; see Fig. 6). The inlets 3a and 4a are formed in a position where opposing to each other and forming a single inlet V at one end of inlet passage Z when the stationary mold 3 and the movable mold 4 are clamped.

As shown in Fig. 2, a first winding apparatus 5 and a second winding apparatus 6 are attached to the stationary mold 3 and the movable mold 4, respectively. The first winding apparatus 5 and the second winding apparatus 6 have sending rolls 5a, 6a and receiving rolls 5b, 6b, respectively. Continuous films 7, 14 are wound up and hung between the sending roll 5a, 6a and the receiving roll 5b, 6b.

Each of the first continuous film 7 and the second continuous film 14 is wound around sending roll 5a, 6a respectively, and is held. Respective leading ends of the first continuous film 7 and the second continuous film 14 are passed through between the stationary mold 3 and the movable mold 4, and wound up to the receiving rolls 5b, 6b to complete the preparation. As shown in Fig. 6, the first continuous film 7 is configured to be smaller in width than the second continuous film 14.

As shown in Fig. 5(a), the first continuous film 7 is composed of an exfoliation layer 9 made of a material which does not comprise adhesive property, a UV hard layer 10 to improve hardness of the surface, an anchor layer 11 to improve fixing of printing, a printing layer 12, and an adhesive layer 13 layered in sequence on a base film 8 made of polyethylene terephthalate (PET). As shown in Fig. 5(b), the second continuous film 14 is composed of an exfoliation layer 16, a UV hard layer 17, an anchor layer 18, a printing layer 19, and an adhesive layer 20 layered in sequence on a base film 15, in the same manner.

As shown in Fig. 5(c), the printing layers 12, 19 have an area where printings are formed (frames 1a, 2a) and an area where printings are not formed (display windows 1b, 2b). The transparent display window (see Fig. 1) is formed by disposing the transparent resin layer through the area where printings are not formed. Plural discrete printing patterns are formed on the printing layers 12, 19 at specified intervals.

As shown in Fig. 6, by configuring the first continuous film 7 and the second continuous film 14 to have different width, only the second continuous film 14 is placed to be opposed to the inlet 4a. Namely, the first continuous film 7 is placed solely at the stationary mold side to be opposed to the cavity 3b, and the second continuous film 14 is placed solely at the movable mold side to be opposed to the inlet 4a, the cavity 4b, and the first curve 4c. In a situation when the first and second winding apparatus 5, 6 are started, the second continuous film 14 is intermittently fed between the stationary mold 3 and the movable mold 4 in parallel with the feeding direction (direction shown by arrow A) of the first continuous film 7 in a status where each of the adhesive layers 13, 20 faces to each other. The intermittent feeding operation is controlled so that the printing pattern consistently corresponds to the cavity 3b of the stationary mold 3 and the cavity 4b of the movable mold 4.

As shown in Fig. 6, the two continuous films are configured to have different width so that only the second continuous film 14 is placed to be opposed to the inlet 4a. However, as shown in Fig. 7, in case when the first continuous film 7 and the second continuous film 14 are having same width, it is possible to configure placing only the second continuous film 14 to be opposed to the inlet 4a, by feeding the first continuous film 7 at the stationary mold side in a manner to be opposed to the cavity 3b, and by shifting the second continuous film 14 in width direction (direction shown by arrow B) and feeding at the movable mold side in a manner to be opposed to the inlet 4a, the cavity 4b, and the first curve 4c.

Next, a resin injection step will be explained referring to Figs. 8 through 12. As shown in Fig. 8, after the printing patterns of the first continuous film 7 and the second continuous film 14 are stopped at respective positions within the cavities 3b, 4b as described above, the stationary mold 3 and the movable mold 4 are clamped.

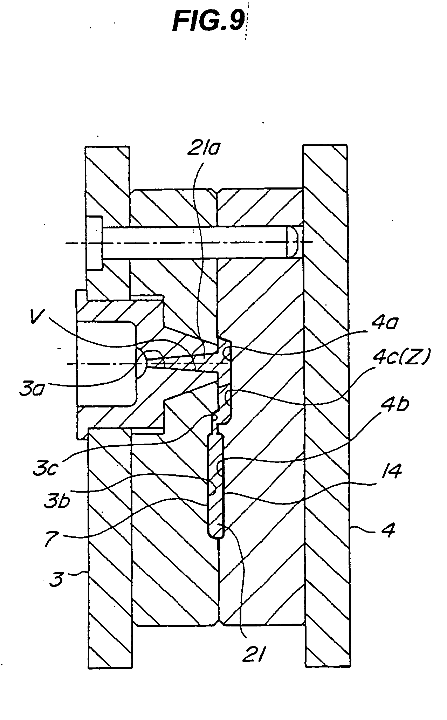

As shown in Fig. 9, after clamping the stationary mold 3 and the movable mold 4, the transparent resin is injected through the inlet V. The injected transparent resin proceeds through the first curve 4c by pressing the second continuous film 14 toward the movable mold 4, and proceeds through the second curve 3c by pressing the first continuous film 7 towards the stationary mold 3, and fill in the inlet passage Z. The transparent resin is filled within the cavities 3b, 4b by pressing the first continuous film 7 and the second continuous film 14 toward the stationary mold side and the movable mold side, and become united with the first continuous film 7 and the second continuous film 14 to mold a molded product 21.

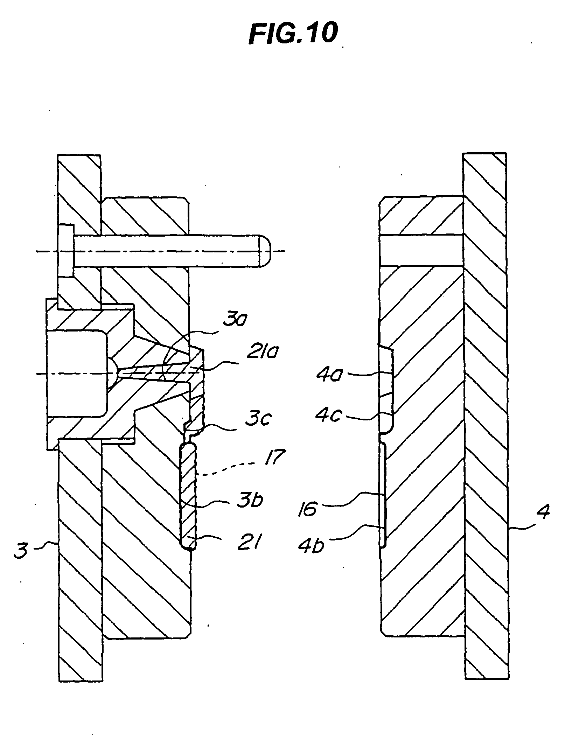

After the molded product 21 is hardened, as shown in Figs. 10 through 12, the stationary mold 3 and the movable mold 4 are opened, the molded product 21 is pressed out in a manner that the molded product 21 is left stick to the stationary mold side by the adhesive force between the inlet 3 a and a sprue formation portion 21a formed at the inlet 3a after the injection, and the molded product 21 is detached by vacuum detacher (not shown). Herewith, the molded product 21 is detached from the first continuous film 7 and the second continuous film 14 between the exfoliation layers 9, 16 and the UV hard layers 10, 17.

Then, the sprue formation portion 21a, which is a portion formed within the inlet, is cut off, and the manufacturing of the protection panel P1 is accomplished.

As described above, by passing through the first continuous film 7 and the second continuous film 14 in a manner that the second continuous film 7 only opposes to the inlet 4a, and after clamping the movable mold 4 and the stationary mold 3, injecting the transparent resin in between the first continuous film 7 and the second continuous film 14 through the inlet passage Z, thereby forming the molded product 21, an inflow of the transparent resin between the continuous film and the mold can be prevented. Furthermore, in the above-described method, there is no need to punch a hole. Therefore, an interfusion of the punch dust produced when punching a hole into the molded product 21 and the forming of a scar on the molded product 21 by the punch dust can be prevented, and the yield ratio of the molded product 21 can be improved.

In addition, the inlet passage Z can be formed in a direction intersecting to the film feeding direction (direction shown by arrow A; see Fig. 6) and as a passage connects to the outside of the first continuous film, and is not limited to the forming of the embodiment. For example, as shown in Fig. 13(a), when the printing pattern is placed intersecting with the film feeding direction (direction shown by arrow A), the inlet passage Z can be formed straight.

In addition, as shown in Fig. 13(b), two printing patterns can be placed parallel in a direction intersecting with the film feeding direction (direction shown by arrow A). In this modification, the inlet passage Z is formed so as to be connected to each of the two printing patterns, and a diverging point Za of the inlet passage Z is formed at outside of the first continuous film 7 (in common with the inlet V).

In addition, as shown in Fig. 13(c), two printing patterns can be placed parallel in a direction intersecting with the film feeding direction (direction shown by arrow A). In this modification, the branching-off point Za of the inlet passage Z is formed within the area of the first continuous film 7.

In addition, as shown in Fig. 13(d), two printing patterns can be placed parallel in a direction intersecting with the film feeding direction (direction shown by arrow A) and to be opposed to the branching-off point Za of the inlet passage Z. In this modification, the inlet passage Z is formed so as to be connected to each of the two printing patterns, and the branching-off point Za is formed within the area of the first continuous film 7 and between the two printing patterns.

### [Second embodiment]

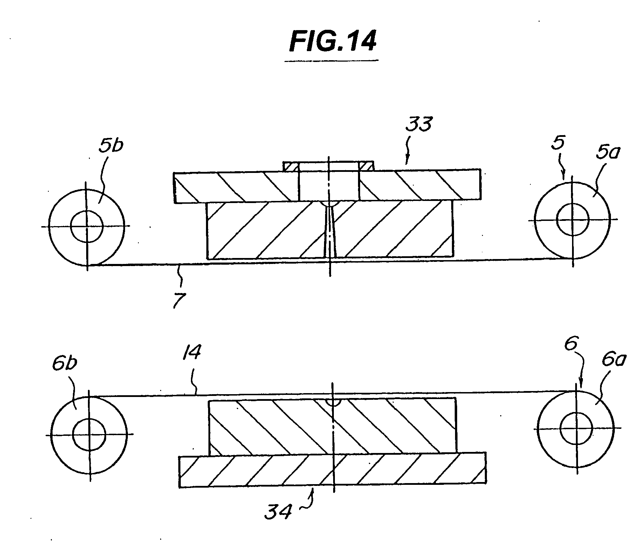

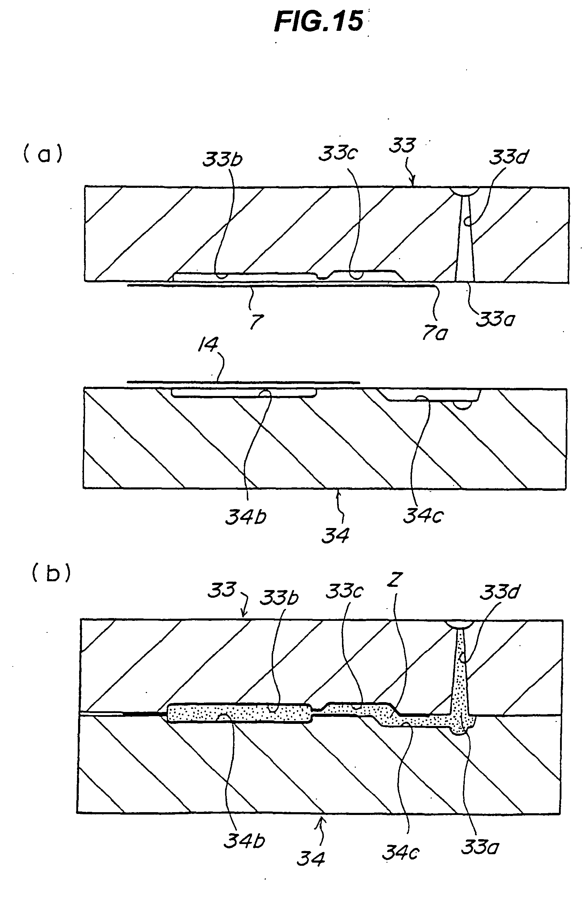

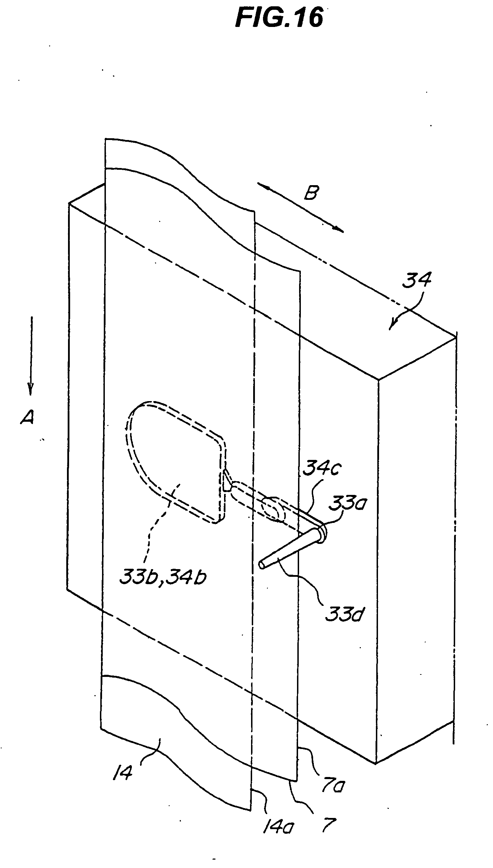

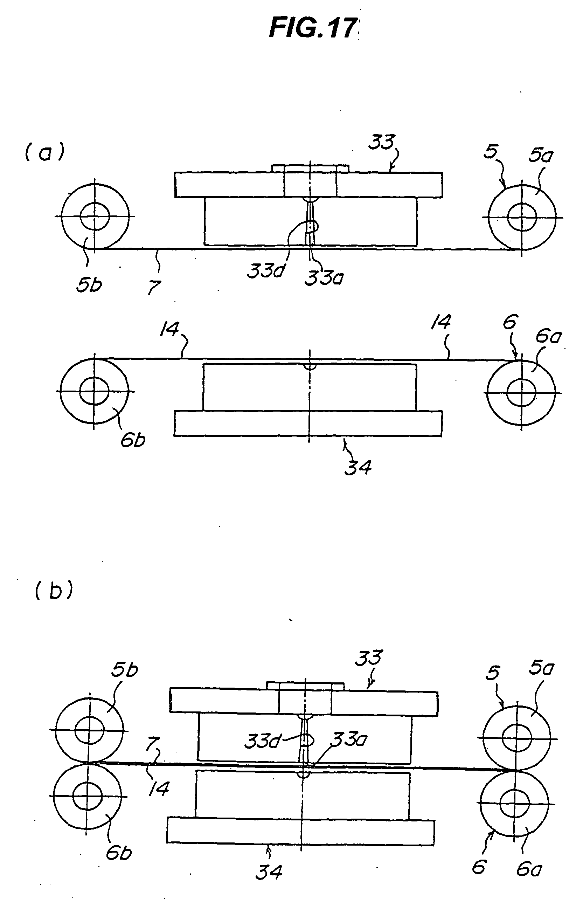

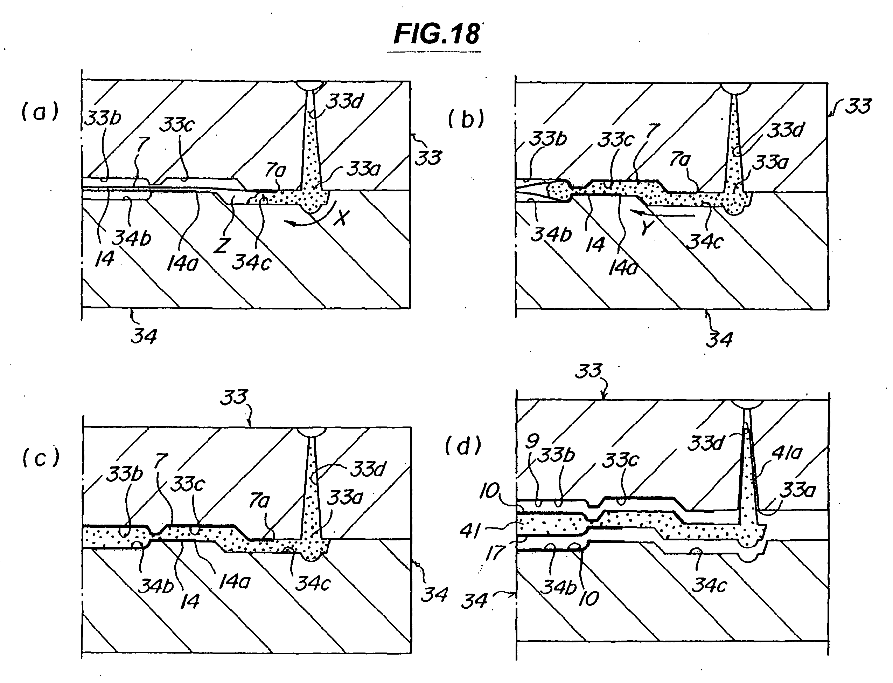

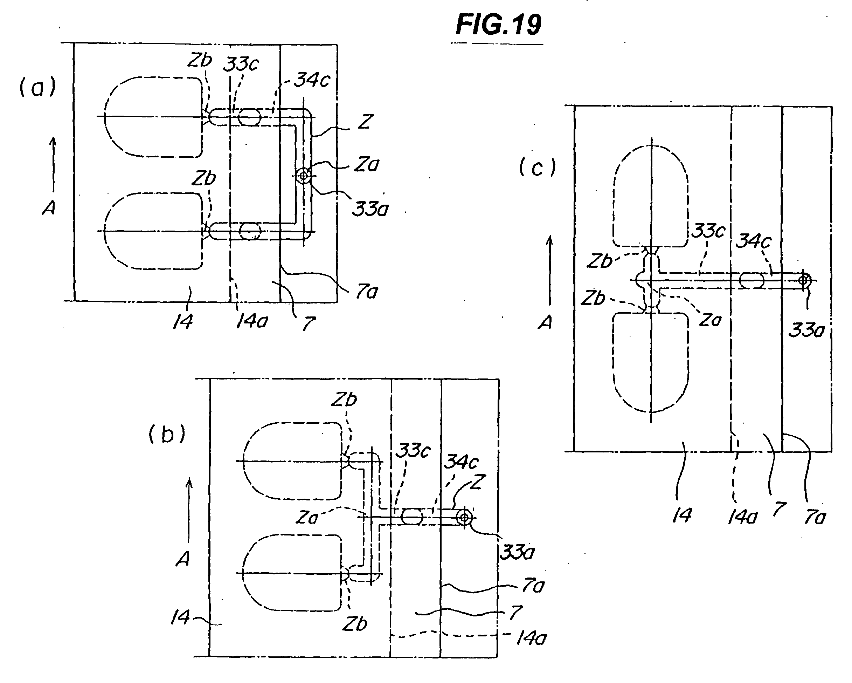

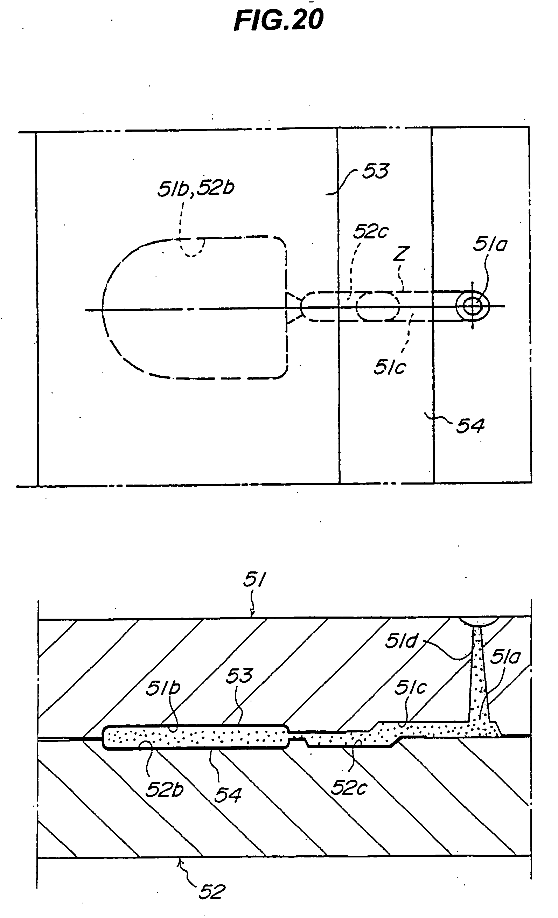

Hereinafter, a second embodiment of the method for manufacturing a double-side in-mold molded product and belonging to the invention will be explained referring to the drawings. Fig. 14 is an explanatory drawing of a step of passing through a continuation film continuously between a stationary mold and a movable mold of a second embodiment; Fig. 15 is a sectional view of the stationary mold and the movable mold; Fig. 16 is a perspective view of the continuous film; Figs. 17 and 18 are explanatory drawings of a method for manufacturing a protect panel; Fig. 19 is an explanatory drawing of an arrangement of an inlet passage and a print pattern; and Fig. 20 is an explanatory drawing of a stationary mold and a movable mold of a another embodiment. Hereinafter, the portions redundant to the above-described first embodiment will be referred same reference numbers and the explanation thereof will be abbreviated.

An example of method for manufacturing the protection panel P1 according to the embodiment will be described hereinafter. The embodiment is an example of a molding apparatus having a method of sending two continuation films parallel.

As shown in Fig. 14, in the first step, a first continuation film 7 and a second continuation film 14 is passed through between a stationary mold 33 and a movable mold 34 continuously.

As shown in Fig. 15(a), a sprue 33d for inletting a transparent resin from an inlet 33c, a second curve 33c,and a cavity 33b are formed to the stationary mold 33. A first curve 34c and a cavity 34b are formed to the movable mold 34. As shown in Fig. 15(b), when the stationary mold 3 and the movable mold 4 are clamped, in the order from a side of the inlet 33a of sprue 33d, the first curve 34c and the second curve 33c forms an S-shaped inlet passage Z extending in a direction (direction shown by arrow B, see Fig. 16) orthogonal to the film feeding direction (direction shown by arrow A; see Fig. 16). The sprue 33d and the inlet 33a are formed in a position where opposing to the first curve 34c when the stationary mold 3 and the movable mold 4 are clamped.

As shown in Fig. 14, a first winding apparatus 5 and a second winding apparatus 6 are attached to the stationary mold 33 and the movable mold 34, respectively. Each of the first winding apparatus 5 and the second winding apparatus 6 has the respective pair of the sending rolls 5a, 6a and receiving rolls 5b, 6b. Continuous films 7, 14 are wound up and hung between the sending roll 5a, 6a and the receiving roll 5b, 6b.

The first continuous film 7 and the second continuous film 14 are wound and held respectively around the sending rolls 5a, 6a. Leading ends of the first continuous film 7 and the second continuous film 14 are passed through between the stationary mold 33 and the movable mold 34 and wound up to the receiving rolls 5b, 6b.to complete the preparation. As shown in Fig. 16, the first continuous film 7 is configured to be wider in width than the second continuous film 14.

As shown in Fig. 16, by configuring the first continuous film 7 and the second continuous film 14 to have different widths, the first continuous film 7 is placed at the movable mold side to be opposed to the first curve 34c, and the second continuous film 14 is placed at the stationary mold side to be opposed to the second curve 33c. Upon starting operation of the first and second winding apparatus 5, 6, the second continuous film 14 is intermittently fed between the stationary mold 33 and the movable mold 34 in parallel with the feeding direction (direction shown by arrow A) of the first continuous film 7 as each of the adhesive layers 13, 20 faces to each other. The intermittent feeding operation is controlled so that the printing pattern consistently corresponds to the cavity 33b of the stationary mold 33 and the cavity 34b of the movable mold 34.

Next, a resin injection molding step will be explained referring to Figs. 17 and 18. As shown in Fig. 17(a), after the printing patterns of the first continuous film 7 and the second continuous film 14 are stopped in respective positions within the cavities 33b, 34b as described above, the stationary mold 33 and the movable mold 34 are clamped as shown in Fig. 17(b).

As shown in Fig. 18(a), after clamping the stationary mold 33 and the movable mold 34, the transparent resin is injected from the sprue 33d through the inlet 33a. When the transparent resin thus injected passes through the first curve 34c, the force of the flowing resin does not exert against an edge portion 7a of the first continuous film 7 opposed to the first curve 34c. That is, the transparent resin injected from the inlet 33a enters in the first curve 34c, and its heading direction X becomes a direction toward the movable mold 34, and the resin moves to the lower area of the edge portion 7a of the first continuous film 7 existing at the stationary mold 33 side. Therefore, the injected transparent resin does not flow inside the first continuous film 7, and the first continuous film 7 can be assuredly pressed toward the cavity 33b.

As shown in Fig. 18(b), the transparent resin filled in the first curve 34c proceeds through the second curve 33c, and at that time, the force of the flowing resin does not exert against an edge portion 14a of the second continuous film 14 opposed to the second curve 33c. That is, the transparent resin filled in the first curve 34c enters in the second curve 33c, and its heading direction Y becomes a direction toward the stationary mold 33, and the resin moves over the edge portion 14a of the second continuous film 14 existing at the movable mold 34 side. Therefore, the injected transparent resin does not flow inside the second continuous film 14, and the second continuous film 14 can be assuredly pressed toward the cavity 34b.

As shown in Fig. 18(c), the transparent resin filled in the second curve 33c is loaded in the cavities 33b, 34b as pressing the first continuous film 7 and the second continuous film 14 toward the stationary mold side and the movable mold side, respectively, to mold a molded product 41 in which the first continuous film 7 and the second continuous film 14 are united.

After the molded product 41 becomes hard as shown in Fig. 18(d), the stationary mold 33 and the movable mold 34 are opened, the molded product 21 is pushed out in a manner that the molded product 21 is left stick to the stationary mold side by the adhesive force to a sprue formation portion 41a formed at the sprue 33d, and the molded product 41 is detached by vacuum detacher (not shown). Herewith, the molded product 41 is detached from the first continuous film 7 and the second continuous film 14 between the exfoliation layers 9, 16 and the UV hard layers 10, 17.

Then, the sprue formation portion 41 a, serving as a portion formed within the sprue 33d, is trimmed to form the protection panel P1.

As described above, by passing through the first continuous film 7 at the stationary mold 33 side in a manner to be opposed to the first curve 34c, and by passing through the second continuous film 14 at the movable mold 34 side in a manner to be opposed to the second curve 33c, after clamping the movable mold 34 and the stationary mold 33, the molded product 41 is molded by injecting the transparent resin between the first continuous film 7 and the second continuous film 14 through the S-shaped inlet passage Z upon clamping the movable mold 34 and the stationary mold 33 with each other, thereby preventing an inflow of the transparent resin between the continuous film and the mold. Furthermore, in the above-described method with not punching a hole, an interfusion of the punch dust produced when punching a hole into the molded product 41 and the forming of a scar on the molded product 41 by the punch dust can be prevented, and the yield ratio of the molded product 41 can be improved.

In addition, the inlet passage Z can be extended in a direction intersecting with the film feeding direction (direction shown by arrow A; see Fig. 16) as well as connecting to the exterior of the first continuous film, and is not limited to the shape of the embodiment. For example, as shown in Fig. 19(a), the two printing patterns are placed in row in a direction intersecting to the film feeding direction (direction shown by arrow A) as coupled to the sole inlet passage Z, thereby forming a branching off point Za of the inlet passage Z at the exterior of the first continuous film 7 (commonly formed with the inlet 33a).

In addition, as shown in Fig. 19(b), the two printing patterns are placed in row in a direction intersecting to the film feeding direction (direction shown by arrow A) as coupled to the sole inlet passage Z, thereby forming a branching off point Za of the inlet passage Z within a region of the second continuous film 14.

In addition, as shown in Fig. 19(c), two printing patterns can be placed in row in a direction intersecting to the film feeding direction (direction shown by arrow A) and to be opposed to the branching off point Za of the inlet passage Z so that the sole inlet passage Z connects to each of the two printing patterns, and the branching-off point Za is formed within the area of the second continuous film 14 and between the two printing patterns.

### [Third embodiment]

Hereinafter, a third embodiment of the method for manufacturing a double-side in-mold molded product and belonging to the invention will be explained referring to the drawings. Fig. 20 is an explanatory drawing of a stationary mold and a movable mold of a third embodiment. Hereinafter, the portions redundant to the above-described first embodiment will be referred same reference numbers and the explanation thereof will be abbreviated.

In the embodiment, in lieu of the stationary mold 33 and the movable mold 34 of the above-described second embodiment, a stationary mold 51 and a movable mold 52 are used as shown in Fig. 20.

A sprue 51d for introducing a transparent resin from an inlet 51a, a first curve 51c connected to the sprue 51d, and a cavity 51d are formed to the stationary mold 51. A second curve 52c, and a cavity 52b connected to the second curve 52c are formed to the movable mold 52. As shown in Fig. 20, when the stationary mold 51 and the movable mold 52 are clamped, an S-shaped inlet passage Z is formed as extending in direction orthogonal to the film feeding direction (direction shown by arrow A; see Fig. 16) by the first curve 51c and the second curve 52c in the order from a side of the inlet 51a of sprue 51d. In addition, by configuring a first continuous film 53 and a second continuous film 54 to have different widths, the first continuous film 53 is placed at the movable mold side to be opposed to the second curve 52c, and the second continuous film 54 is placed at the stationary mold side to be opposed to the first curve 51c.

By using the above configured stationary mold 51 and the movable mold 52, where passing through the first continuous film 53 at the stationary mold 51 side in a manner to be opposed to the second curve 52c as well as passing through the second continuous film 54 at the movable mold side 52 in a manner to be opposed to the first curve 5 1 c, a molded product 41 is molded by injecting the transparent resin between the first continuous film 53 and the second continuous film 54 through the S-shaped inlet passage Z after clamping the movable mold 52 and the stationary mold 51, thereby preventing an inflow of the transparent resin between the continuous film. Furthermore, in the above-described method without punching any hole, an interfusion of the punch dust produced when punching a hole into the molded product 41 and the forming of a scar on the molded product 41 by the punch dust can be prevented, and the yield ratio of the molded product 41 can be improved.

In addition, in the embodiment, the second continuous film 54 is passed through at the side of the movable mold 52, which the inlet 51 a is not formed, so that the second continuous film 54 can be passed through at a position opposed to the inlet 51 a. Therefore, by the configuration of the embodiment, the inflow of the transparent resin between the second continuous film 54 and the movable mold 52 can be assuredly prevented.

### [Fourth embodiment]

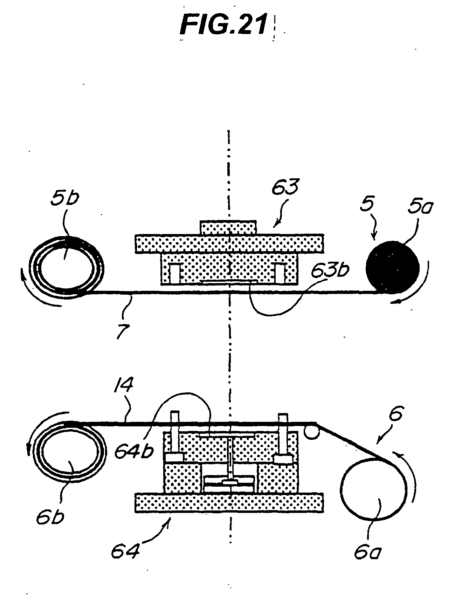

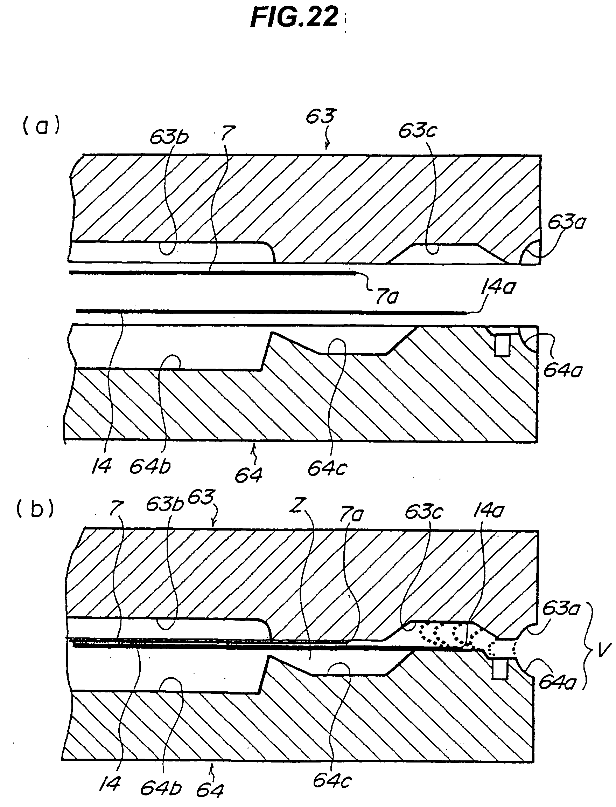

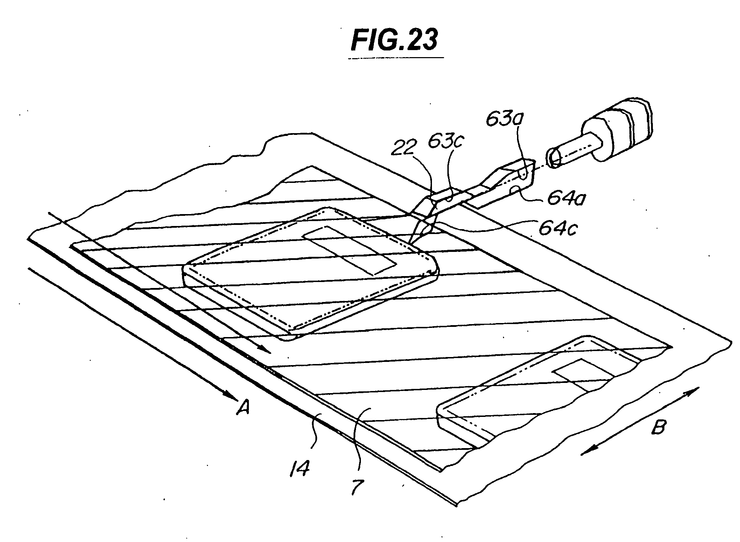

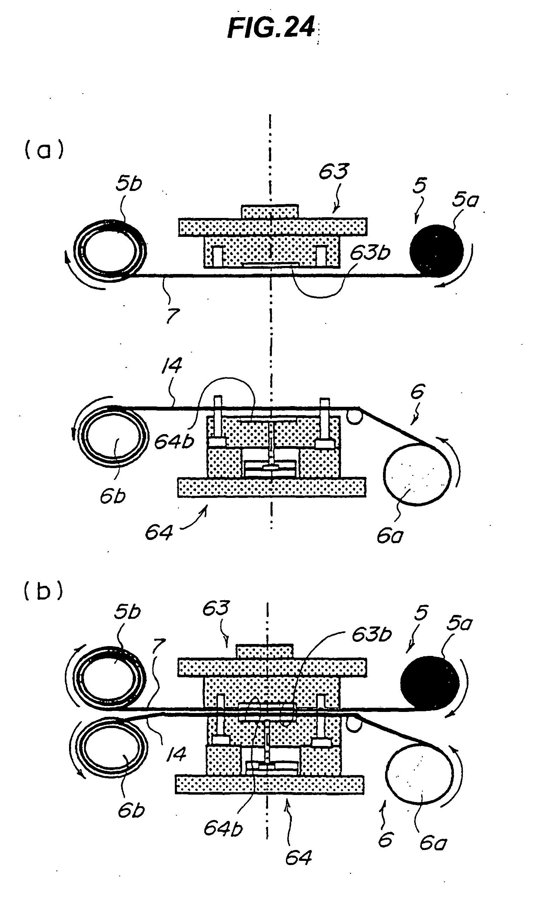

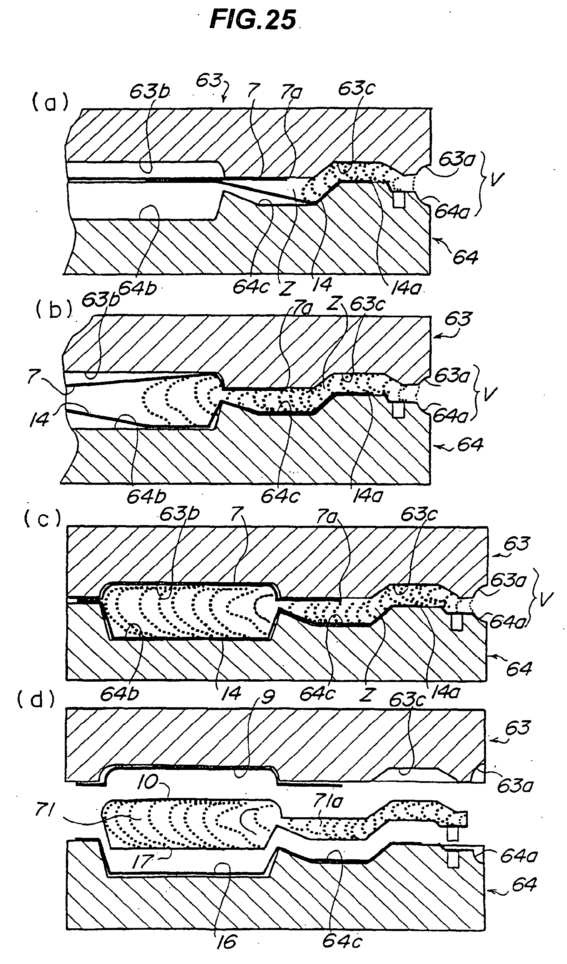

Hereinafter, a fourth exemplary embodiment of the method for manufacturing a double-side in-mold molded product not belonging to the invention will be explained referring to the drawings. Fig. 21 is an explanatory drawing of a step of passing through a continuation film continuously between a stationary mold and a movable mold of a forth embodiment; Fig. 22 is a sectional view of the stationary mold and the movable mold; Fig. 23 is a perspective view of the continuous film; and Figs. 24 and 25 are explanatory drawings of a method for manufacturing a protect panel. Hereinafter, the portions redundant to the above-described first embodiment will be referred same reference numbers and the explanation thereof will be abbreviated.

An example of method for manufacturing the protection panel P1 according to the embodiment will be described hereinafter. The embodiment is an example of a molding apparatus having a method of sending two continuation films parallel.

As shown in Fig. 21, in the first step, a first continuation film 7 and a second continuation film 14 are passed through between a stationary mold 63 and a movable mold 64 continuously.

As shown in Fig. 22(a), an inlet 63d for inletting a transparent resin, a first curve 63c,and a cavity 63b are formed to the stationary mold 63. An inlet 64a, a second curve 64c, and a cavity 64b connected to the second curve 64c are formed to the movable mold 64. As shown in Fig. 22(b), when the movable mold 64 and the stationary mold 63 are clamped, an S-shaped inlet passage Z is formed of the first curve 63c and the second curve 64c in extending in a direction orthogonal to the film feeding direction (direction shown by arrow A; see Fig. 23) from a side of the inlet 63a sequentially. The inlets 63a, 64a are formed in a position where opposing each other and forming a single inlet when the stationary mold 63 and the movable mold 64 are clamped.

As shown in Fig. 21, a first winding apparatus 5 and a second winding apparatus 6 are attached to the stationary mold 63 and the movable mold 64, respectively. Each of the first winding apparatus 5 and the second winding apparatus 6 has respective pair of sending rolls 5a, 6a and receiving rolls 5b, 6b. Continuous films 7, 14 are wound up and hung between the sending rolls 5a, 6a and the receiving rolls 5b, 6b.

Each of the first continuous film 7 and the second continuous film 14 is wound around the sending roll 5a, 6a respectively, and is held. Leading ends of the first continuous film 7 and the second continuous film 14 are passed through between the stationary mold 63 and the movable mold 64 and wound up to the receiving rolls 5b, 6b to complete the preparation. As shown in Fig. 23, the first continuous film 7 is configured to be narrower in width than the second continuous film 14.

As shown in Fig. 23, by configuring the first continuous film 7 and the second continuous film 14 to have different widths, the first continuous film 7 is placed at the stationary mold side to be opposed to the second curve 64c, and the second continuous film 14 is placed at the movable mold side to be opposed to the first curve 64c. In a status when the first and second winding apparatus 5, 6 are started, the second continuous film 14 is intermittently fed between the stationary mold 63 and the movable mold 64 in parallel with the feeding direction (direction shown by arrow A) of the first continuous film 7 where each of the adhesive layers 13, 20 faces each other. The intermittent feeding operation is controlled so that the printing pattern consistently corresponds to the cavity 63b of the stationary mold 63 and the cavity 64b of the movable mold 64.

Next, a resin injection molding step will be explained referring to Figs. 24 and 25. As shown in Fig. 24(a), after the printing patterns of the first continuous film 7 and the second continuous film 14 are stopped in positions within the cavities 63b, 64b as described above, and the stationary mold 63 and the movable mold 64 are then clamped as shown in Fig. 24(b).

As shown in Fig. 25(a), after clamping the stationary mold 63 and the movable mold 64, the transparent resin is injected from the inlet V. When the injected transparent resin passes through the first curve 63c, the force of the flowing resin does not exert to an edge portion 14a of the second continuous film 14 opposed to the first curve 63c. That is, the transparent resin injected from the inlet V enters in the first curve 63c, and its heading direction X becomes a direction toward the stationary mold 63, thereby rendering the resin move over the edge portion 14a of the second continuous film 14 existing at the movable mold 64 side. Therefore, the injected transparent resin does not inflow inside the second continuous film 14, and the second continuous film 14 can be assuredly pressed toward the cavity 64b.

As shown in Fig. 25(b), the transparent resin filled in the first curve 34c proceeds to the second curve 64c, and at that time, the force of the flowing resin does not exert against an edge portion 7a of the first continuous film 7 opposed to the second curve 64c. That is, the transparent resin moves into the second curve 64c after it fills in the first curve 63c, and its heading direction Y becomes a direction toward the movable mold 64, thereby rendering the resin move under the edge portion 7a of the first continuous film 7 existing at the stationary mold 63 side. Therefore, the injected transparent resin does not inflow inside the first continuous film 7, and the first continuous film 7 can be assuredly pressed towards the cavity 63b.

As shown in Fig. 25(c), the transparent resin filling in the second curve 64c is further filled in the cavities 63b, 64b by pressing the first continuous film 7 and the second continuous film 14 toward the stationary mold side and the movable mold side, respectively, and becomes united with the first continuous film 7 and the second continuous film 1 to mold a molded product 71.

After the molded product 71 becomes hard, as shown in Fig. 25(d), the stationary mold 63 and the movable mold 64 are opened, and the molded product 71 is detached by vacuum detacher (not shown). Herewith, the molded product 71 is detached from the first continuous film 7 and the second continuous film 14 between the exfoliation layers 9, 16 and the UV hard layers 10, 17.

Then, the sprue formation portion 71 a, a formed portion remaining in the inlet, is cut off, and thereby the protection panel P1 is molded.

As described above, by passing through the first continuous film 7 at the stationary mold 63 side in a manner to be opposed to the second curve 64c, and by passing through the second continuous film 14 at the movable mold 64 side in a manner to be opposed to the first curve 63c, and after clamping the movable mold 64 and the stationary mold 63, a molded product 71 is molded by injecting the transparent resin in between the first continuous film 7 and the second continuous film 14 through the S-shaped inlet passage Z, and an inflow of the transparent resin between the continuous film and the mold can be prevented. Furthermore, in the above-described method without punching any hole, an interfusion of the punch dust produced when punching a hole into the molded product 71 and the forming of a scar on the molded product 71 by the punch dust can be prevented, and the yield ratio of the molded product 71 can be improved.

In addition, the inlet passage Z can be formed in a direction intersecting with the film feeding direction (direction shown by arrow A; see Fig. 16) and as a passage connecting to the exterior of the continuous film, and is not limited to the configuration of the embodiment that to be formed in direction orthogonal to the film feeding direction.

### Industrial Applicability

As described above, forming an inlet passage extending in a direction orthogonal to a film feeding direction for inletting the resin into the cavity when clamping the stationary mold and the movable mold, forming an inlet at one end of the inlet passage for injecting the resin; placing each edge of the first continuous film and the second continuous film positionally shifted in a direction orthogonal to the film feeding direction; the first continuous film and the second continuous film are passed through at the stationary mold side and at the movable mold side, respectively. A molded product is molded by injecting the resin between the first continuous film and the second continuous film from the inlet passage after clamping the movable mold and the stationary mold and pressing the first continuous film and the second continuous film sequentially toward the mold side by the resin. Hence, by applying the method with no need to punch a hole, an interfusion of the punch dust into the molded product and the forming of a scar on the molded product by the punch dust can be prevented, and the yield ratio of the molded product can be improved

## Claims

1. A method for double-side in-mold transfer molding in using a stationary mold (33) and a movable mold (34) having a cavity (33b, 34b) for molding a molded product and passing parallel a first continuous film (7) and a second continuous film (14) each having a printing layer facing to one another, the method comprising the steps of:
rendering the stationary mold (33) have a second curve (33c) coupled to the cavity (33b, 34b);
rendering the movable mold (34) have a first curve (34c) opposed to a sprue formed in the stationary mold;
forming an S-shaped inlet passage (Z)extending in a direction intersecting with a film feeding direction (A) having the first curve (34c) and the second curve (33c) sequentially in the order from a side of an inlet of a sprue in the movable mold (34) and the stationary mold (33) when the molds are clamped;
passing through the first continuous film (7) on the side of the stationary mold (33) as to render an end thereof face to the first curve (34c) of the movable mold (34); and
passing through the second continuous film (14) on the side of the movable mold (34) as to render an end thereof face to the second curve (33c) of the stationary mold (33)
and further comprising the step of:
injecting a resin between the first continuous film (7) and the second continuous film (14) from the S-shaped inlet passage (Z) upon clamping the movable mold (34) and the stationary mold (33) to mold a molded product.

2. A method for double-side in-mold transfer molding in using a stationary mold (51) and a movable mold (52) having a cavity (51b, 52b) for molding a molded product and passing parallel a first continuous film (53) and a second continuous film (54) each having a printing layer facing to one another, the method comprising the steps of:
rendering the stationary mold (51) have a first curve (51 c) coupled to a sprue (51d) formed in the stationary mold (51);
rendering the movable mold (52) have a second curve (52c) coupled to the cavity (51 b, 52b);
forming an S-shaped inlet passage (Z) extending in a direction intersecting with a film feeding direction having the first curve (51c) and the second curve (52c) sequentially in the order from a side of an inlet of a sprue in the movable mold (52) and the stationary mold (51) when the molds are clamped;
passing through the first continuous film (53) on the side of the stationary mold (51) as to render an end thereof face to the second curve (52c) of the movable mold (52); and
passing through the second continuous film (54) on the side of the movable mold (52) as to render an end thereof face to the first curve (51c) of the stationary mold (51)
and further comprising the step of:
injecting a resin between the first continuous film (53) and the second continuous film (54) from the S-shaped inlet passage (Z) upon clamping the movable mold (52) and the stationary mold (51) to mold a molded product.

## Patentansprüche

1. Verfahren zum doppelseitigen Transferpressen im Werkzeug durch Verwenden eines stationären Formwerkzeugs (33) und eines bewegbaren Formwerkzeugs (34) die eine Aussparung (33b, 34b) zum Formpressen eines ausgeformten Produkts und parallelen Vorbeiführen einer ersten fortlaufenden Folie (7) und einer zweiten fortlaufenden Folie (14) aufweisen, von denen jede eine Druckschicht aufweist, die einander gegenüber stehen, wobei das Verfahren die Schritte aufweist:
Erbringen, dass das stationäre Formwerkzeug (33) eine zweite mit der Aussparung (33b, 34b) gekoppelte Krümmung (33c) aufweist;
Erbringen, dass das bewegbare Formwerkzeug (34) eine erste Krümmung (34c) gegenüber liegend zu einem in dem stationären Formwerkzeug ausgebildeten Anguss aufweist;
Ausbilden eines S-förmigen Einlassdurchlasses (Z), der sich in einer Richtung erstreckt, die sich mit einer Folienzuführrichtung (A) schneidet, die erste Krümmung (34c) und die zweite Krümmung (33c) aufeinanderfolgend in der Reihenfolge von einer Seite eines Einlasses eines Angusses in dem bewegbaren Formwerkzeug (34) und dem stationären Formwerkzeug (33) aufweist, wenn die Formwerkzeuge eingespannt werden;
Hindurchführen der ersten fortlaufenden Folie (7) auf der Seite des stationären Formwerkzeugs (33), um zu erbringen, dass ein Ende von dieser zu der ersten Krümmung (34c) des bewegbaren Formwerkzeugs (34) zeigt; und
Hindurchführen der zweiten fortlaufenden Folie (14) auf der Seite des bewegbaren Formwerkzeugs (34), um zu erbringen, dass ein Ende von dieser zu der zweiten Krümmung (33c) des stationären Formwerkzeugs (33) zeigt
und weiterhin den Schritt aufweist:
Einspritzen eines Harzes zwischen die erste fortlaufende Folie (7) und die zweite fortlaufende Folie (14) von dem S-förmigen Einlassdurchlass (Z) beim Einspannen des bewegbaren Formwerkzeugs (34) und des stationären Formwerkzeugs (33), um ein ausgeformtes Produkt zu formen.

2. Verfahren zum doppelseitigen im Transferpressen im Werkzeug durch Verwenden eines stationären Formwerkzeugs (51) und eines bewegbaren Formwerkzeugs (52) die eine Aussparung (51 b, 52b) zum Formpressen eines ausgeformten Produkts und parallelen Vorbeiführen einer ersten fortlaufenden Folie (53) und einer zweiten fortlaufenden Folie (54) aufweisen, von denen jede eine Druckschicht aufweist, die einander gegenüber stehen, wobei das Verfahren die Schritte aufweist:
Erbringen, dass das stationäre Formwerkzeug (51) eine erste mit einem in dem stationären Formwerkzeug (51) ausgebildeten Anguss (51 d) gekoppelte Krümmung (51 c) aufweist;
Erbringen, dass das bewegbare Formwerkzeug (52) eine zweite mit der Aussparung (51 b, 52b) gekoppelte Krümmung (52c) aufweist;
Ausbilden eines S-förmigen Einlassdurchlasses (Z), der sich in einer Richtung erstreckt, die sich mit einer Folienzuführrichtung schneidet, die erste Krümmung (51 c) und die zweite Krümmung (52c) aufeinander folgend in der Reihenfolge von einer Seite eines Einlasses eines Angusses in dem bewegbaren Formwerkzeug (52) und dem stationären Formwerkzeug (51) aufweist, wenn die Formwerkzeuge eingespannt werden;
Hindurchführen der ersten fortlaufenden Folie (53) auf der Seite des stationären Formwerkzeugs (51), um zu erbringen, dass ein Ende von dieser zu der zweiten Krümmung (52c) des bewegbaren Formwerkzeugs (52) zeigt; und
Hindurchführen der zweiten fortlaufenden Folie (54) auf der Seite des bewegbaren Formwerkzeugs (52), um zu erbringen, dass ein Ende von dieser face zu der ersten Krümmung (51c) des stationären Formwerkzeugs (51) zeigt und weiterhin den Schritt aufweist:
Einspritzen eines Harzes zwischen die erste fortlaufende Folie (53) und die zweite fortlaufende Folie (54) von dem S-förmigen Einlassdurchlass (Z) beim Einspannen des bewegbaren Formwerkzeugs (52) und des stationären Formwerkzeugs (51), um ein ausgeformtes Produkt zu formen.

## Revendications

1. Procédé de moulage par transfert dans un moule double face utilisant un moule fixe (33) et un moule mobile (34) ayant une cavité (33b, 34b) pour mouler un produit et faire passer en parallèle un premier film continu (7) et un second film continu (14) ayant chacun une couche imprimée se faisant face l'une l'autre,
procédé comprenant les étapes suivantes :
- on utilise le moule fixe (33) ayant une seconde courbe (33c) couplée à la cavité (33b, 34b),
- on utilise le moule mobile (34) ayant une première courbe (34c) opposée à une broche formée dans le moule fixe,
- on réalise un passage d'entrée (Z) en forme de S s'étendant dans la direction d'intersection avec la direction d'alimentation en film (A) ayant une première courbe (34c) et une seconde courbe (33c) séquentiellement dans cet ordre à partir du côté de l'entrée de la broche dans le moule mobile (34) et le moule fixe (33) lorsque les moules sont serrés,
- on fait passer le premier film continu (7) sur le côté du moule fixe (33) pour qu'une extrémité de celui-ci soit en regard de la première courbe (34c) du moule mobile (34), et
- on fait passer le second film continu (14) sur le côté du moule mobile (34) pour que l'extrémité soit en regard de la seconde courbe (33c) du moule fixe (33), et
le procédé comprend en outre l'étape suivante :
- on injecte une résine entre le premier film continu (7) et le second film continu (14) à partir du passage (Z) ayant une entrée en forme de S, par serrage du moule mobile (34) et du moule fixe (33) pour mouler un produit.

2. Procédé de moulage par transfert dans un moule double face utilisant un moule fixe (51) et un moule mobile (52) ayant une cavité (51b, 52b) pour mouler un produit et faire passer en parallèle un premier film continu (53) et un second film continu (54) ayant chacun une première couche d'impression, se faisant face,
procédé **caractérisé en ce qu'**
- on utilise un premier moule fixe (51) avec une première courbe (51c) couplée à une broche (51d) réalisée dans le moule fixe (51),
- on utilise le moule mobile (52) avec une seconde courbe (52c) couplée à la cavité (51b, 52b),
- on forme un passage d'entrée (Z) à section en S s'étendant dans une direction coupant la direction d'alimentation de films ayant la première courbe (51c) et la seconde courbe (52c) séquentiellement dans cet ordre à partir d'un côté de l'entrée de la broche du moule mobile (52) et du moule fixe (51) lorsque les moules sont serrés,
- on fait passer le premier film continu (53) sur le côté du moule fixe (51) de manière qu'une extrémité de celui-ci soit tournée vers la seconde courbe (52c) du moule mobile (52), et
- on fait passer le second film continu (54) sur le côté du moule mobile (52) pour que son extrémité soit au niveau de la première courbe (51c) du moule fixe (51),
le procédé comprend en outre l'étape suivante :
- injection d'une résine entre le premier film continu (53) et le second film continu (54) à partir du passage d'entrée (Z) à section en forme de S par serrage du moule mobile (52) et du moule fixe (51) pour réaliser un produit moulé.
